# EUROPEAN PATENT SPECIFICATION

(11) **EP 1 939 513 B1**
(45) Date of publication and mention of the grant of the patent: **22.08.2012**
(21) Application number: 07380366.0
(22) Date of filing: 18.12.2007
(51) Int. Cl.: F16L 33/04, F16L 33/08

(54) **Clamp for a flexible pipe**
Schelle für flexible Rohrleitungen
Pince pour tuyau flexible

(30) Priority: 28.12.2006 ES 200603303
(43) Date of publication of application: 02.07.2008
(73) Proprietor: Cikautxo, S. Coop., 48710 Berriatua (Bizkaia) (ES)
(72) Inventor: Alberdi Bascaran, Aitor, 20600 Eibar (Gipuzkoa) (ES)
(74) Representative: Igartua, Ismael

(56) References cited:
- EP-A1- 1 445 526
- FR-A1- 2 887 321
- US-A1- 2005 087 979

## Description

### TECHNICAL FIELD

This invention relates to a clamp for connecting flexible pipes used in the automotive sector.

### PRIOR ART

Clamps are known for connecting flexible pipes in different technical fields. Said clamps comprise a band that is disposed around a flexible pipe and fixing means for fixing said band to said flexible pipe.

Regardless of the field of application, with this type of clamp the objective is to secure said clamp for a flexible pipe by subjecting it to a certain tightening force to prevent turning movements of the clamp and also keep it perpendicular in relation to said pipe. To achieve this it is necessary to fix the clamp in relation to the pipe in an axial direction and a radial direction.

US 2005/0087979 A1 describes a clamp for a flexible pipe that comprises a first band that surrounds said pipe, a second band disposed around a portion of said first band and an elastic means disposed between said portion of the first band and said second band. In addition, the clamp comprises fixing means disposed along said first band so that said clamp is fixed in relation to said pipe in the axial direction and in the radial direction. The pipe comprises on its interior surface a plurality of bevels up to which the fixing means of the clamp extend.

### DISCLOSURE OF THE INVENTION

It is the object of this invention to provide a clamp for a flexible pipe that comprises a fixing system adapted to fix the clamp in an axial direction and in a radial direction in relation to said pipe, thereby improving some of the characteristics of the clamps in the prior art.

The clamp of the invention comprises a first band that surrounds said pipe, a second band disposed around a portion of said first band and an elastic means disposed between said portion of the first band and said second band. In addition, the clamp comprises fixing means disposed along said first band. Said fixing means comprise a first hook and a second hook that are fixed to the end of the pipe and which comprise a respective housing for the first band. Said hooks are housed at both ends of the second band and comprise a respective pin that passes through the space between the portion of the first band and the second band, the elastic means being positioned between both pins.

The clamp of the invention can be supplied pre-assembled, in other words, with the aforementioned hooks already situated in their corresponding positions, the pins of said hooks being inserted in their housings beforehand, thereby facilitating the subsequent assembly in the pipe.

These and other advantages and characteristics of the invention will be made evident in the light of the drawings and the detailed description thereof.

### DESCRIPTION OF THE DRAWINGS

Figure 1 shows a perspective view of the clamp of the invention fixed to a flexible pipe.
Figure 2 shows an exploded view of the clamp of Figure 1.
Figure 3 shows a perspective view of a portion of the clamp of Figure 1.
Figure 4 shows a perspective view of the first hook of the clamp of Figure 1.
Figure 5 shows a perspective view of the third hook of the clamp of Figure 1.
Figure 6 shows a perspective view of the fixing of a hook of the clamp of Figure 1 to the pipe.
Figure 7 shows a perspective view of the arrangement of the pin of the second hook of the clamp of Figure 1 in the pipe.

### DETAILED DISCLOSURE OF THE INVENTION

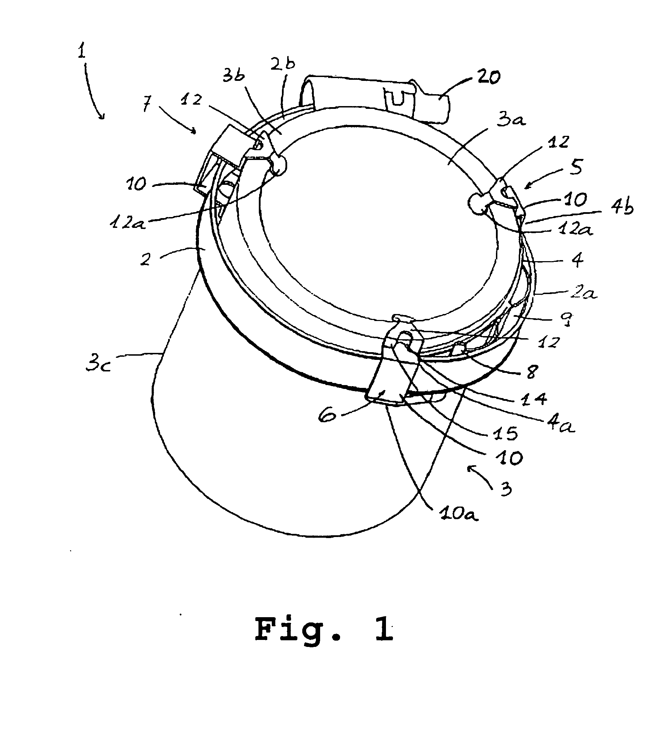

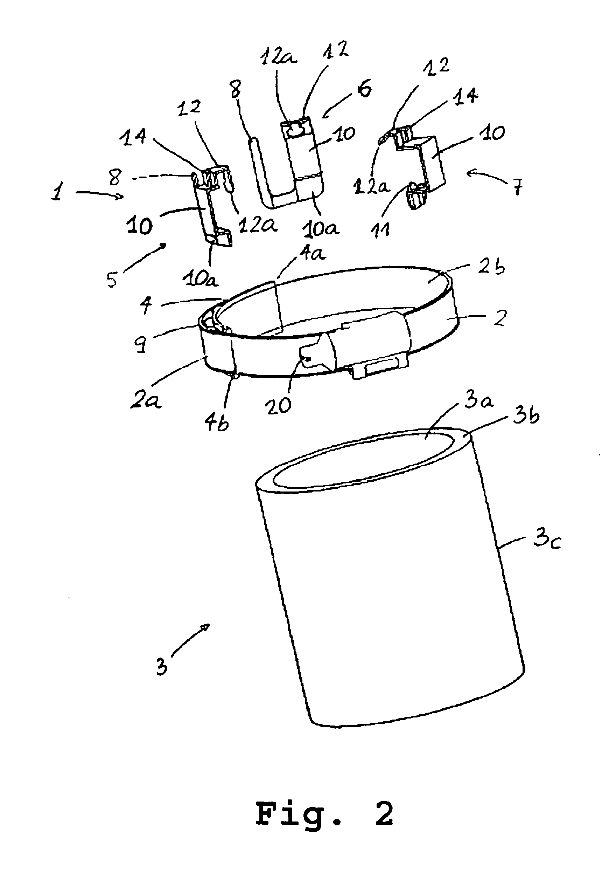

As can be seen in the embodiment shown in Figures 1 and 2, the clamp 1 of the invention for a flexible pipe 3 comprises a first band 2 that surrounds said pipe 3, a second band 4 disposed around a portion 2a of said first band 2 and an elastic means disposed between said portion 2a and said second band 4. The elastic means comprise a band 9 with a radially undulating shape.

The clamp 1 comprises tightening means that comprise an endless screw 20, which with its threaded rod engages in feed notches (not shown in the figures) comprised on the first band 2, the process of tightening said first band 2 being performed in the pipe 3.

The clamp 1 comprises, in the embodiment shown in the figures, three independent hooks 5, 6, 7 disposed along said first band 2, so that said clamp 1 is fixed in relation to said pipe 3 in an axial direction and a radial direction. This thus prevents unwanted turning movements of the clamp 1 and also maintains the perpendicularity of the clamp 1 in relation to the pipe 3.

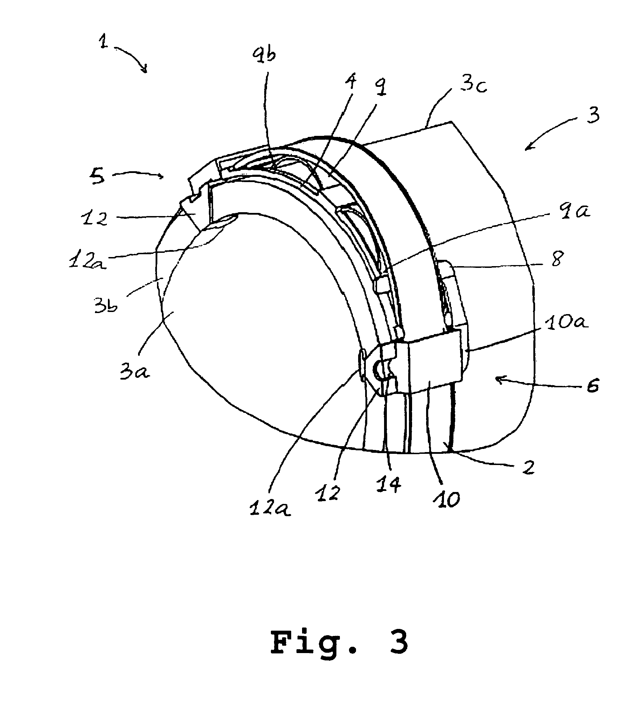

A first hook 5 and a second hook 6 face each other and are disposed substantially adjacent to the ends 4a, 4b of the second band 4, as can be seen in Figures 1 and 3. The third hook 7 is disposed, as shown in Figure 1, approximately at the same distance from the hooks 5 and 6 and on a side diametrically opposed to them.

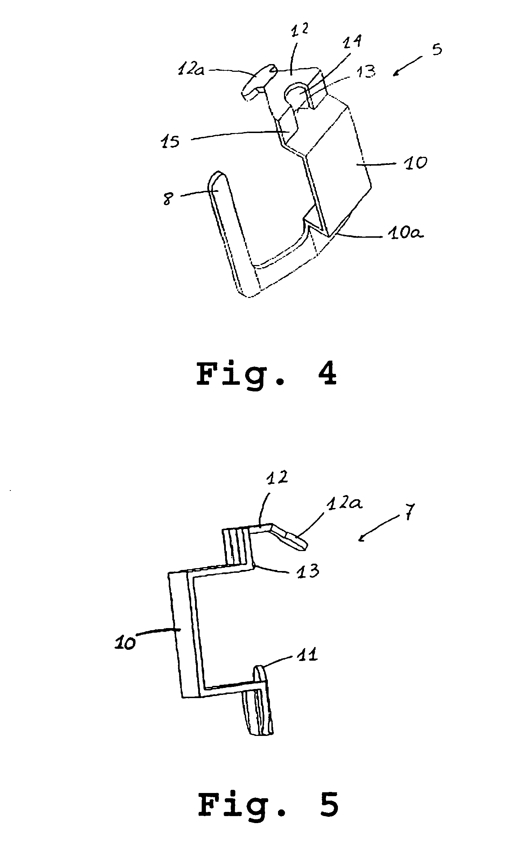

As shown in Figures 4 and 5, each hook 5, 6, 7 comprises a U-shaped section 10 where the first band 2 is housed. The first and second hooks 5, 6 comprise a pin 8 that is inserted in the space between the portion 2a of the first band 2 and the second band 4, the elastic means being positioned between both pins 8. Said pins 8 are situated next to the ends 9a, 9b of the band 9.

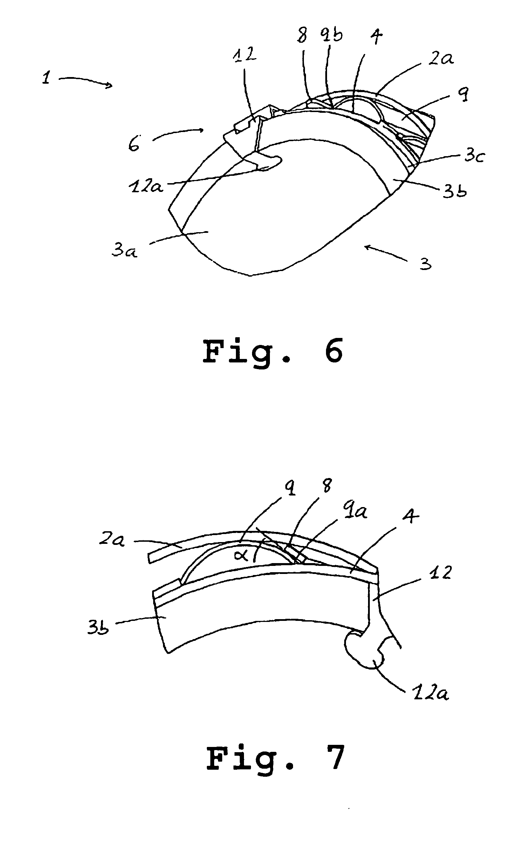

The pins 8 are disposed on the hooks 5 and 6 on the end 10a opposite the one on which the part that is fixed to the end of the pipe and which is described below is positioned. Said pins 8 start at said end 10a and extend in a manner substantially parallel to the respective section 10 (see Figure 4), although at a certain inclination α (see Figure 7) in order to guarantee that the band 9 slides beneath each pin 8 during the process of tightening the clamp 1 in the pipe 3.

The third hook 7, shown in Figure 5, comprises a vertical projection 11 disposed facing the interior surface 2b of the first band 2. Thanks to each pin 8 of the first and second hooks 5, 6 and to said vertical projection 11 of the third hook 7, the first band 2 remains connected to the section 10 of the three hooks 5, 6, 7 in the processes of assembling and fixing the clamp 1 to the pipe 3.

With reference to the part of the hooks 5, 6, 7 that is fixed on one end of the pipe 3, each hook 5, 6, 7 comprises an arm 12 that embraces the edge 3b of said pipe 3 and presses the interior surface 3a of the pipe 3. The fixing of said arm 12 on said interior surface 3a is performed by means of a pressing process. Figure 1 shows the clamp 1 disposed in the pipe 3 before said pressing process, and Figure 3 shows said clamp once the pressing process has been performed. It can be seen that in the clamp 1 of the invention it is not necessary to fix to the pipe 3 the ends of the hooks 5, 6, 7 opposite the respective arms 12.

Each arm 12 comprises a flat surface that presses against the interior surface 3a of the pipe 3 so that once the pressing of said arm 12 in the pipe 3 has been completed, said arm 12 forms a smooth surface with the interior surface 3a of the pipe 3. In addition, said arm 12 comprises a rounded end 12a, which avoids any possible damage on said interior surface 3a. With the clamp 1 of the invention it is not necessary to make any bevel on the pipe 3.

In this embodiment the hooks 5, 6 are 7 are independent of each other. This allows for a simpler and cheaper solution than others of the prior art in which the hooks are connected by open rings. Furthermore, with the hooks 5, 6 and 7 it is possible to fix the clamp 1 to the pipe 3 in its default position, or rotated 180°, simply by changing the position of the hooks 5, 6 and 7. In the embodiment shown, the hooks 5 and 6 are symmetrical.

The hooks 5 and 6 can be pre-assembled on the clamp 1, the first band 2 being housed in the respective sections 10 and said hooks 5 and 6 being prevented from loosing from said first band 2 by means of the pin 8, inserted in its housing, and by means of the part of the hooks 5 and 6 that is fixed to the end of the pipe 3, in other words, the respective arm 12.

Each hook 5, 6, 7 also comprises a horizontal projection 13 that interferes with the exterior surface 3c of the pipe 3, thereby ensuring that each hook 5, 6, 7 is fixed in relation to the pipe 3 during the process of pressing the arm 12 on the interior surface 3a, and also once the pressing process has been completed.

As can be seen in Figures 4 and 5, each hook 5, 6, 7 comprises an opening 14 on a surface 15 that is supported on the exterior surface 3c of the pipe 3, thereby enabling the free deformation of the pipe 3 through said opening 14 during the pressing process.

## Claims

1. Clamp (1) for a flexible pipe (3), which comprises
a first band (2) that surrounds said pipe (3), a second band (4) disposed around a portion (2a) of said first band (2) and an elastic means disposed between said portion (2a) of the first band (2) and said second band (4), and
fixing means disposed along said first band (2) so that said clamp (1) is fixed in relation to said pipe (3) in an axial direction and a radial direction,
wherein said fixing means comprise a first hook (5) and a second hook (6) that are fixed to the end of the pipe (3) and which have a respective housing for the first band (2), said first hook (5) and said second hooks (6) being disposed at both ends of the second band (4), **characterised in that** said hooks (5, 6) comprise a respective pin (8) that passes through the space between the portion (2a) of the first band (2) and the second band (4), the elastic means being positioned between both pints (8).

2. Clamp according to the preceding claim, wherein said first hook (5) and said second hook (6) are independent.

3. Clamp according to any of the preceding claims, wherein said first hook (5) and said second hook (6) are symmetrical.

4. Clamp according to any of the preceding claims, wherein the clamp (1) comprises a third hook (7) that is fixed to the end of the pipe (3) and which has a housing for the first band (2), said third hook (7) being disposed approximately at the same distance from said first and second hooks (5, 6), on a side diametrically opposed to them.

5. Clamp according to the preceding claim, wherein the third hook (7) comprises a vertical projection (11) that faces the interior surface (2b) of the first band (2), ensuring that said third hook (7) remains connected to said first band (2).

6. Clamp according to any of the preceding claims, wherein each hook comprises an arm (12) that embraces the edge (3b) of the end of the pipe (3) and presses the interior surface (3a) of said pipe (3).

7. Clamp according to the preceding claim, wherein said arm (12) comprises a flat surface that presses against the interior surface (3a) of the pipe (3).

8. Clamp according to claim 7, wherein the flat surface of the arm (12) comprises a rounded end (12a).

9. Clamp according to any of the preceding claims, wherein each hook comprises a horizontal projection (13) that interferes with the exterior surface (3c) of the pipe (3).

10. Clamp according to any of the preceding claims, wherein each hook comprises an opening (14) on a surface (15) that is supported on the exterior surface (3c) of the pipe (3), thereby enabling the free deformation of the pipe (3) through said opening (14).

11. Clamp according to any of the preceding claims, wherein each pin (8) of the first and second hook (5, 6) comprises a certain inclination (α) in order to ensure that the elastic means slide beneath said pin (8) during the tightening process.

## Patentansprüche

1. Klemme (1) für ein flexibles Rohr (3), umfassend:
ein erstes Band (2), das das Rohr (3) umgibt, ein zweites Band (4), das um einen Abschnitt (2a) des ersten Bandes (2) angeordnet ist, und ein elastisches Mittel, das zwischen dem Abschnitt (2a) des ersten Bandes (2) und dem zweiten Band (4) angeordnet ist, und
ein Fixiermittel, das entlang des ersten Bandes (2) angeordnet ist, so dass die Klemme (1) in Bezug auf das Rohr (3) in einer axialen Richtung und eined radialen Richtung befestigt ist,
wobei das Fixiermittel einen ersten Haken (5) und einen zweiten Haken (6) umfasst, die am Ende des Rohrs (3) befestigt sind und ein jeweiliges Gehäuse für das erste Band (2) aufweisen, wobei der erste Haken (5) und der zweite Haken (6) an beiden Enden des zweiten Bandes (4) angeordnet sind, **dadurch gekennzeichnet, dass** die Haken (5, 6) einen jeweiligen Stift (8) umfassen, der durch den Raum zwischen dem Abschnitt (2a) des ersten Bandes (2) und dem zweiten Band (4) verläuft, wobei das elastische Mittel zwischen beiden Stiften (8) angeordnet ist.

2. Klemme nach dem vorstehenden Anspruch, wobei der erste Haken (5) und der zweite Haken (6) unabhängig sind.

3. Klemme nach einem der vorstehenden Ansprüche, wobei der erste Haken (5) und der zweite Haken (6) symmetrisch sind.

4. Klemme nach einem der vorstehenden Ansprüche, wobei die Klemme (1) einen dritten Haken (7) umfasst, der am Ende des Rohrs (3) befestigt ist und ein Gehäuse für das erste Band (2) aufweist, wobei der dritte Haken (7) ungefähr im gleichen Abstand zu den ersten und zweiten Haken (5, 6) auf einer diesen diametral entgegengesetzten Seite angeordnet ist.

5. Klemme nach dem vorstehenden Anspruch, wobei der dritte Haken (7) einen vertikalen Vorsprung (11) umfasst, der der Innenfläche (2b) des ersten Bandes (2) zugewandt ist und sicherstellt, dass der dritte Haken (7) mit dem ersten Band (2) verbunden bleibt.

6. Klemme nach einem der vorstehenden Ansprüche, wobei jeder Haken einen Arm (12) umfasst, der den Rand (3b) des Endes des Rohrs (3) umgibt und gegen die Innenfläche (3a) des Rohrs (3) drückt.

7. Klemme nach dem vorstehenden Anspruch, wobei der Arm (12) eine flache Oberfläche umfasst, die gegen die Innenfläche (3a) des Rohrs (3) drückt.

8. Klemme nach Anspruch 7, wobei die flache Fläche des Arms (12) ein abgerundetes Ende (12a) umfasst.

9. Klemme nach einem der vorstehenden Ansprüche, wobei jeder Haken einen horizontalen Vorsprung (13) umfasst, der in die Außenfläche (3c) des Rohrs (3) eingreift.

10. Klemme nach einem der vorstehenden Ansprüche, wobei jeder Haken eine Öffnung (14) auf einer Fläche (15) umfasst, die auf der Außenfläche (3c) des Rohrs (3) getragen wird, wodurch die freie Verformung des Rohrs (3) durch die Öffnung (14) ermöglicht wird.

11. Klemme nach einem der vorstehenden Ansprüche, wobei jeder Stift (8) des ersten und des zweiten Hakens (5, 6) eine gewisse Neigung (α) aufweist, um sicherzustellen, dass das elastische Mittel während des Anziehprozesses unterhalb des Stifts (8) gleitet.

## Revendications

1. Pince (1) pour tuyau flexible (3), qui comprend :
une première bande (2) qui entoure ledit tuyau (3), une seconde bande (4) disposée autour d'une partie (2a) de ladite première bande (2) et des moyens élastiques disposés entre ladite partie (2a) de la première bande (2) et ladite seconde bande (4), et
des moyens de fixation disposés le long de ladite première bande (2) de sorte que ladite pince (1) est fixée par rapport audit tuyau (3) dans une direction axiale et une direction radiale,
dans laquelle lesdits moyens de fixation comprennent un premier crochet (5) et un deuxième crochet (6) qui sont fixés à l'extrémité du tuyau (3) et qui ont un logement respectif pour la première bande (2), ledit premier crochet (5) et ledit deuxième crochet (6) étant disposés aux deux extrémités de la seconde bande (4), **caractérisée en ce que** lesdits crochets (5, 6) comprennent une broche (8) respective qui passe à travers l'espace situé entre la partie (2a) de la première bande (2) et la seconde bande (4), les moyens élastiques étant positionnés entre les deux broches (8).

2. Pince selon la revendication précédente, dans laquelle ledit premier crochet (5) et ledit deuxième crochet (6) sont indépendants.

3. Pince selon l'une quelconque des revendications précédentes, dans laquelle ledit premier crochet (5) et ledit deuxième crochet (6) sont symétriques.

4. Pince selon l'une quelconque des revendications précédentes, dans laquelle la pince (1) comprend un troisième crochet (7) qui est fixé à l'extrémité du tuyau (3) et qui a un logement pour la première bande (2), ledit troisième crochet (7) étant disposé approximativement à la même distance desdits premier et deuxième crochets (5, 6), sur un côté diamétralement opposé à ces derniers.

5. Pince selon la revendication précédente, dans laquelle le troisième crochet (7) comprend une saillie verticale (11) qui fait face à la surface intérieure (2b) de la première bande (2), garantissant que ledit troisième crochet (7) reste raccordé à ladite première bande (2).

6. Pince selon l'une quelconque des revendications précédentes, dans laquelle chaque crochet comprend un bras (12) qui englobe le bord (3b) de l'extrémité du tuyau (3) et appuie sur la surface intérieure (3a) dudit tuyau (3).

7. Pince selon la revendication précédente, dans laquelle ledit bras (12) comprend une surface plate qui appuie contre la surface intérieure (3a) du tuyau (3).

8. Pince selon la revendication 7, dans laquelle la surface plate du bras (12) comprend une extrémité arrondie (12a).

9. Pince selon l'une quelconque des revendications précédentes, dans laquelle chaque crochet comprend une saillie horizontale (13) qui interfère avec la surface extérieure (3c) du tuyau (3).

10. Pince selon l'une quelconque des revendications précédentes, dans laquelle chaque crochet comprend une ouverture (14) sur une surface (15) qui est supportée sur la surface extérieure (3c) du tuyau (3), permettant ainsi la déformation libre du tuyau (3) à travers de ladite ouverture (14).

11. Pince selon l'une quelconque des revendications précédentes, dans laquelle chaque pince (8) du premier et du deuxième tuyau (5, 6) comprend une certaine inclinaison (α) afin de garantir que les moyens élastiques coulissent sous ladite broche (8) pendant le processus de serrage.
